## Europäisches Patentamt
## European Patent Office
## Office européen des brevets

(19)

(11) Veröffentlichungsnummer: **0 200 020**
**A1**

(12) **EUROPÄISCHE PATENTANMELDUNG**

(21) Anmeldenummer: 86104545.8

(22) Anmeldetag: 03.04.86

(51) Int. Cl.⁴: **C 09 J 7/02**

(30) Prioritat: 19.04.85 DE 3514160

(43) Veröffentlichungstag der Anmeldung:
05.11.86 Patentblatt 86/45

(84) Benannte Vertragsstaaten:
AT BE CH DE FR GB IT LI NL SE

(71) Anmelder: Beiersdorf Aktiengesellschaft
Unnastrasse 48
D-2000 Hamburg 20(DE)

(72) Erfinder: Sanders, Bernhard
59 Goodge Street
London W1P 1FA(GB)

(72) Erfinder: McLean, Keith, Dr.
Am Burgfried 11
D-2390 Flensburg(DE)

(72) Erfinder: Papon, Klaus-Eberhad
Kieler Strasse 542
D-2000 Hamburg 54(DE)

(72) Erfinder: Karman, Werner, Dr.
Stolpmünder Strasse 11
D-2000 Hamburg 73(DE)

(72) Erfinder: Gilde, Ingo
Vogt-Koch-Weg 15s
D-2000 Hamburg 61(DE)

(54) Verfahren zur Herstellung eines Klebebandes.

(57) Verfahren zur Herstellung eines Klebebandes mit einem seitlichen, kleberfreien Anfasser und im Streifenstrich aufgetragenen Kleber, wobei aus einer breiten Bahn eines Folien-Trägers mit parallelen Kleberstreifen das einezlne Klebeband dadurch geschnitten wird, daß man an nur jeweils einer Seite, nämlich entweder nur an den linken oder aber nur an den rechten Seiten aller parallelen Kleberstreifen jeweils im kleberfreien Bereich dicht am Rand des jeweiligen Kleberstreifens schneidet.

FIG.3

EP 0 200 020 A1

BEIERSDORF AKTIENGESELLSCHAFT
HAMBURG


Verfahren zur Herstellung eines Klebebandes


Die Erfindung betrifft ein Verfahren zur Herstellung eines Klebebandes mit einem seitlichen, kleberfreien Anfasser.

Derartige Klebebänder sind bekannt. Um einen seitlichen Anfasser vorzusehen, sind verschiedene Verfahren zur Herstellung solcher Klebebänder vorgeschlagen worden. So kann an einem Klebeband durch Kaschieren, Falten, Inaktivieren, Streifenstrich oder geeigneten Schneidprozeß ein Anfasser vorgesehen werden.

Bei Schneidprozessen wird dabei so vorgegangen, daß man ausgehend von doppelten Breiten der klebenden und nichtklebenden Teile durch einen Schnitt in der jeweiligen Mitte des Klebers oder des kleberfreien Bereiches Klebebänder herausschneidet. Zwangsläufig werden dabei spiegelbildliche Klebebänder hergestellt, die auf Rollen aufgewickelt sogenannte Links- und Rechtsrollen ergeben. Gleiches kann auch durch gezieltes Abschneiden eines Teils des klebenden Streifens erreicht werden, der dann aber anschließend verworfen werden muß.

Um hier Abhilfe zu schaffen, beschreibt die DE-OS 3 027 487 ein Verfahren zur Herstellung von selbstklebenden Klebebandstreifen, bei dem insbesondere kein Abfall produziert werden soll, vielmehr die gesamte aufgestrichene Klebemasse zu Klebebändern mit Anfassern

0200020

verarbeitet wird. Dem Problem von Links- und Rechtsrollen konnte dabei jedoch nicht abgeholfen werden, so daß ein anschließendes Umwickeln mit entsprechendem wirtschaftlichen Aufwand erforderlich ist.

Auch Kaschieren, Falten und Inaktivieren bedürfen zusätzlicher Materialien, um die klebenden Zonen abzudecken. Der Klebstoff an den abgedeckten Stellen ist nicht weiter zu verwenden. Der Vorteil einer zusätzlichen Dicke und damit erhöhten Steifigkeit der abgedeckten Stellen wird durch diese Nachteile mehr als aufgewogen.

Kaschieren, Falten, Inaktivieren und Streifenstrich allein ergeben nur klebende und nichtklebende Teile einer Bahn. Die bisher bekannte weitere Verarbeitung zu einem Klebeband wird erschwert durch die Aussteuerungsschwierigkeiten des jeweiligen Prozesses, um das gewünschte Produkt bezüglich der Wickelrichtung (Links- und Rechtsrollen) und der Gewährleistung eines 100 %ig nichtklebenden Anfassers, also keine unabgedeckte oder beschichtete Klebemasse an der Kante des Klebebandes. Dabei sollte zudem an der Seite des Klebebandes ohne Anfasser kein zu großer nichtklebender Teil entstehen, der ggf. zu einer Verwechslung mit dem eigentlichen Anfasser an der gegenüberliegenden Seite des Klebebandes führen könnte.

In der Praxis bedeutet dies sowohl einen langsamen Produktionsablauf, oft mit dem bloßen Auge gesteuert, neben dem Nachteil von erhaltenen Links- und Rechtsrollen. Um ein einheitliches Produkt zu erzielen, ist dabei ein anschließendes Umwickeln unumgänglich.

Wird die Klebemasse im Streifenstrich auf einen Träger aufgetragen, so ist der gewünschte Anfasser ohne ein zusätzliches Bedrucken oft nur schwer zu erkennen und am Klebeband aufzufinden. Besondere Schwierigkeiten bereitet es, wenn bei bedruckten Klebebändern der Aufdruck eine bestimmte Abmessung und/oder einen bestimmten Abstand zur Masse haben soll, also kein Streudruck über den gesamten Träger sein soll. Durch Bedrucken sind schließlich nicht nur Links- und Rechtsrollen das Ergebnis, sondern auch diese Varianten jeweils mit Text nach oben und nach unten, je nach Druck. Die Fertigungssteuerung dieser vier Versionen ist demgemäß aufwendig und schwierig.

Aufgabe der Erfindung war es, hier Abhilfe zu schaffen durch ein Verfahren, bei dem Klebebänder mit seitlichem, kleberfreiem Anfasser hergestellt werden können, ohne die Nachteile des Standes der Technik in Kauf nehmen zu müssen.

Demgemäß betrifft die Erfindung ein Verfahren zur Herstellung eines Klebebandes mit einem seitlichen, kleberfreien Anfasser und in Streifenstrich aufgetragenen Kleber, wobei aus einer breiten Bahn eines Folienträgers mit parallelen Kleberstreifen das einzelne Klebeband dadurch geschnitten wird, daß man an nur jeweils einer Seite, nämlich entweder nur an den linken oder aber nur an den rechten Seiten aller parallelen Kleberstreifen jeweils im kleberfreien Bereich dicht am Rand des jeweiligen Kleberstreifens schneidet.

Vorteilhafte Ausgestaltungen dieses Verfahrens sind in den Unteransprüchen näher gekennzeichnet.

Insbesondere ist es vorteilhaft, vor dem Auftragen der Streifenstriche den Folien-Träger durch Erwärmen vorzuschrumpfen. Damit wird erreicht, daß eine genaue Fertigungssteuerung ohne Abweichungen von den vorgegebenen Maßen und damit ein gleichförmiges Produktbild gewährleistet ist.

Besonders vorteilhaft ist dabei, einen lösungsmittelfreien Kleber im Streifenstrich aufzutragen, um negative Einflüsse von Lösungsmitteln auf den Folien-Träger zu vermeiden. Zugleich lassen sich damit negative Wirkungen und Nachwirkungen auf die Produkteigenschaften vermeiden, insbesondere in Hinsicht auf die Klebkraft, die Verarbeitbarkeit, die Verankerung zwischen allen Schichten und auch die physiologische Unbedenklichkeit.

Geschnitten wird im kleberfreien Bereich, wobei aus technischen Gründen ein Schneiden genau an der Grenzstelle zwischen klebendem und nichtklebendem Teil mit letzter Sicherheit nicht möglich ist. Daher wird bewußt in der klebemassefreien Zone geschnitten, bei geringstmöglichem Abstand zum klebenden Teil. Dieser Abstand ist vorteilhaft gerade so groß, wie aus Sicherheitsgründen der Toleranzen wegen notwendig ist. 0,5 - 0,8 mm Abstand haben sich in der Praxis als vorteilhaft erwiesen.

Als Kleber verwendet man insbesondere einen Selbstkleber, wie er handelsüblich und allgemein Stand der Technik ist. Der Auftrag des Klebers im Streifenstrich oder das Bedrucken als erster Arbeitsgang werden vorteilhaft durch Kantensteuerung geregelt. Die Steuerung des zweiten Arbeitsganges (Bedrucken bzw. Streifenstrich) und des Aufschneidens erfolgt anschließend vorteilhaft optisch, abgestimmt auf den ersten Arbeitsgang. Optisch bedeutet dabei nicht nur mittels sichtbarem Licht, sondern auch mittels Randbereichen, wie IR und UV.

Das erfindungsgemäße Verfahren weist gegenüber dem Stand der Technik beachtliche Vorteile auf. So liefert es gleichförmige Klebebänder mit Anfasser, wobei der Anfasser obendrein optisch erkennbar gemacht werden kann, ohne Probleme bei der Herstellung zu bringen. Auch als Werbeträger kann der Anfasser vorteilhaft genutzt werden. Probleme mit Rechts- und Linksrollen gibt es nicht, nachträgliches Umwickeln ist nicht erforderlich. Zudem ist der Anfasser mit Sicherheit massefrei. Verluste an Klebmasse treten nicht auf.

In den Figuren ist die Herstellung eines Klebebandes mit seitlichem Anfasser einmal nach herkömmlicher Weise (Fig. 1 und 2) und zum anderen gemäß der Erfindung (Fig. 3 und 4) dargestellt.

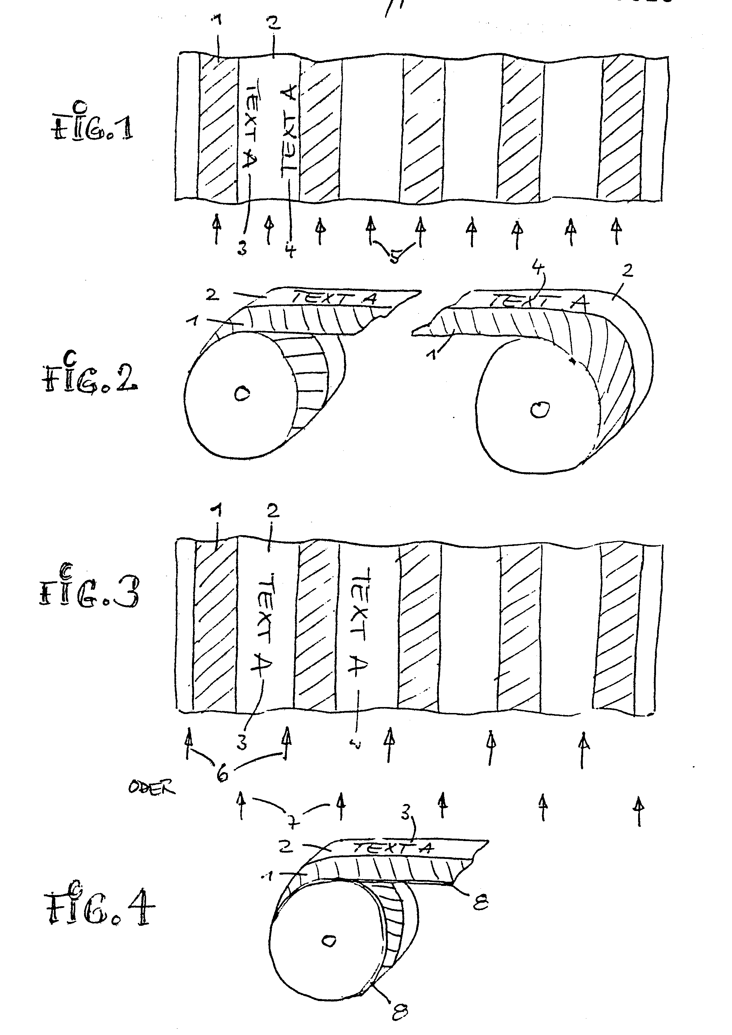

Fig. 1 zeigt eine breite Bahn mit im Streifenstrich aufgetragenen Kleberstreifen 1 auf einem Folienträger 2 und dazwischen aufgedruckten Schriftbildern 3 und 4. Diese breite Bahn wird an den mit Pfeilen 5 gekennzeichneten Stellen zu Klebebändern aufgeschnitten. Dabei ergeben sich zwei verschiedene Klebebänder, die in Fig. 2 dargestellt sind, sogenannte Rechts- und Linksrollen.

In Fig. 3 ist zum besseren Vergleich mit Fig. 1 eine gleiche Bahn mit Kleberstreifen 1 und Folienträger 2 dargestellt, jedoch mit einem einheitlichen Aufdruck 3. Diese Bahn wird erfindungsgemäß an den mit den Pfeilen 6 bzw. 7 dargestellten Stellen aufgeschnitten. Dabei erhält man einen einzigen Typ eines Klebebandes, dargestellt in Fig. 4. An der dem Anfasser gegenüberliegenden Seite des Klebebandes befindet sich ein schmaler Bereich 8, der klebmassefrei ist. Dieser Bereich 8 ist dadurch entstanden, daß der Schnitt 6 bzw. 7 nicht exakt an der Grenzlinie Kleber zu klebstofffreiem Bereich geführt wurde. Für die praktische Handhabung des Klebebandes ergeben sich daraus jedoch keinerlei Nachteile, da dieser Bereich zu klein ist, um als Anfasser erkannt zu werden oder etwa mit dem eigentlichen Anfasser verwechselt zu werden.

Im folgenden wird die Erfindung beispielhaft dargestellt, ohne damit aber den Gegenstand der Erfindung unnötig einschränken zu wollen.

## Beispiel 1

Eine 30 µm OPP-Folie wurde mit einer Leistung von 2 KW in 1 m Breite bei einer Bahngeschwindigkeit von 20 m/min coroabehandelt und sodann mit einer Primerdispersion in einer Stärke von 1 µm (trocken) beschichtet. Die Primerdispersion bestand aus einer 1 : 1 Mischung aus einer handelsüblichen dauerklebrigen Acrylatdispersion (Primal PS 83 D von Rohm & Haas) und Methylmethacrylatmodifiziertem Naturkautschuklatex (Hevea plus). Die Beschichtung wurde sodann in einem Gurtbandtrockner 2 min bei 100°C getrocknet und wies dann nur noch schwache Klebrigkeit auf.

Darauf wurde die Rückseite mit einer handelsüblichen Silikonlösung in einer Trockenstärke von 0,2 µm beschichtet und ebenfalls in einem Gurtbandtrockner 2 min auf 110°C erhitzt.

Diese Folie wurde sodann auf der Primerseite mit heißschmelzendem, lösungsmittelfreien Haftklebstoff in Streifen von 15 mm Breite in Abständen von 10 mm beschichtet.

Der schmelzende Haftklebstoff hatte folgende Zusammensetzung:

| | |
|---|---|
| SIS-Bockcopolymer mit 14 % Styrol und Schmelzindex 200°C von 6 | 30 % |
| Pentaerythritester von hydriertem Kolophonium Erweichungspunkt 104°C | 38 % |
| Paraffinisches Mineralöl | 30 % |
| Zink-Dibutyl-Dithiocarbamat | 2 % |

Die Auftragsstärke der Streifen lag bei 15 µm. Durch Kantensteuerung wurde sichergestellt, daß alle Streifen einen genau festgelegten Abstand von der Steuerkante aufwiesen.

Hierauf wurde der Träger an einer üblichen Flexodruckmaschine mit 9 mm breiten Streifen roter Druckfarbe auf Basis Polyamidharzen versehen. Durch Steuerung der Bahnführung wurde wiederum sichergestellt, daß die Streifen einen genau festgelegten Abstand zur Steuerkante aufwiesen. Dieser wurde so eingestellt, daß die Streifen genau in dem Bereich zwischen den Klebemassenstreifen lagen.

Unmittelbar danach wurden an einer Rollenschneideanlage 0,5 mm von der Grenze rechts vom Druckstreifen bzw. links vom Klebemassestreifen geschnitten. Es entstanden 25 mm breite Streifen, die zur Rolle gewickelt wurden.

Patentansprüche

1. Verfahren zur Herstellung eines Klebebandes mit einem seitlichen, kleberfreien Anfasser und im Streifenstrich aufgetragenen Kleber, wobei aus einer breiten Bahn eines Folien-Trägers mit parallelen Kleberstreifen das einezlne Klebeband dadurch geschnitten wird, daß man an nur jeweils einer Seite, nämlich entweder nur an den linken oder aber nur an den rechten Seiten aller parallelen Kleberstreifen jeweils im kleberfreien Bereich dicht am Rand des jeweiligen Kleberstreifens schneidet.

2. Verfahren nach Anspruch 1, dadurch gekennzeichnet, daß man vor dem Auftragen der Streifenstriche den Folienträger durch Erwärmen schrumpft.

3. Verfahren nach Anspruch 2, dadurch gekennzeichnet, daß man nach dem Schrumpfen und vor oder nach Auftragen der Streifenstriche insbesondere die kleberfreien Bereiche bedruckt.

4. Verfahren nach einem der Ansprüche 1 - 3, dadurch gekennzeichnent, daß man einen lösungsmittelfreien Kleber im Streifenstrich aufträgt.

5. Verfahren nach einem der Ansprüche 1 - 4, dadurch gekennzeichnet, daß der dicht am Rand des jeweiligen Kleberstreifens angelegte Schnitt im Abstand von etwa 0,5 - 0,8 mm von dem Kleberstreifen durchgeführt wird.

6. Verfahren nach einem der Ansprüche 1 - 5, dadurch gekennzeichnet, daß man als Kleber einen Selbstkleber verwendet.

7. Verfahren nach einem der Ansprüche 1 - 6, dadurch gekennzeichnet, daß der Auftrag des Kleber-Streifenstrichs und ggf. das Bedrucken durch Kantensteuerung geregelt wird.

8. Verfahren nach einem der Ansprüche 1 - 7, dadurch gekennzeichnet, daß eine optische Steuerung verwendet wird, um den Schnitt am jeweiligen Rand eines Kleberstreifens durchzuführen und/oder um jeden nachfolgenden Streifen des Streifenstrichs durch den vorausgehenden Streifen zu regeln.

9. Klebeband, erhalten nach einem der Ansprüche 1-8.

1/1                              0200020

FIG.1

FIG.2

FIG.3

ODER

FIG.4

### Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 073 611 (JOHN BENNETT) * Ansprüche * | 1,6,9 | C 09 J 7/02 |
| | --- | | |
| A | FR-A-2 116 964 (ANDRE GALLET) | 1,6,9 | |
| | --- | | |
| A | GB-A-1 555 808 (WILLIAM C.J. BOTTRELL) | 1,6,9 | |
| | --- | | |
| A | US-A-4 201 799 (CHARLES E. STEPHENS) | 1,6,9 | |
| | ----- | | |

| RECHERCHIERTE SACHGEBIETE (Int. Cl 4) |
|---|
| C 09 J 7/00 |

Der vorliegende Recherchenbericht wurde für alle Patentansprüche erstellt.

| Recherchenort | Abschlußdatum der Recherche | Prüfer |
|---|---|---|
| DEN HAAG | 16-07-1986 | GIRARD Y.A. |